# EUROPÄISCHE PATENTSCHRIFT

(11) **EP 1 488 675 B1**
(45) Veröffentlichungstag und Bekanntmachung des Hinweises auf die Patenterteilung: **04.08.2010**
(21) Anmeldenummer: 04011881.2
(22) Anmeldetag: 19.05.2004
(51) Int. Cl.: A01D 7/06

(54) **Rechen**
Rake
Râteau

(30) Priorität: 16.06.2003 DE 10327330
(43) Veröffentlichungstag der Anmeldung: 22.12.2004
(73) Patentinhaber: Franz Jost AG, 4760 Büllingen (BE)
(72) Erfinder: Jost, Helmut, 4760 Büllingen (BE); Jost, Ernst, 4760 Büllingen (BE)
(74) Vertreter: Bauer, Dirk

(56) Entgegenhaltungen:
- US-A- 3 724 188
- US-A- 4 167 217
- US-A- 5 161 360
- US-A- 5 417 044
- US-A- 5 758 480

## Beschreibung

Die Erfindung betrifft einen Rechen mit einem Oberteil zur Verbindung mit einem Stiel und einem abgewinkelt gegenüber dem Oberteil angeordneten Unterteil mit einer Mehrzahl von Zinken.

Derartige Rechen sind allgemein bekannt und werden insbesondere im Gartenbau und in der Landwirtschaft sehr häufig eingesetzt, beispielsweise zum Sammeln und/oder Wenden von Gras oder Heu, bei der Stallarbeit oder, insbesondere in der Herbstzeit, beim Sammeln von Laub. Allgemein bekannt sind auch solche fächerartig aufgebauten Rechen, die als sogenannte"Laubbesen" bezeichnet werden. Derartige Rechen, die aus Metall oder als Kunststoff-Spritzgussteile gefertigt sein können, besitzen vergleichsweise lange, im vorderen Abschnitt abgewinkelte Zinken, wodurch eine vergleichsweise große Elastizität jeder einzelnen Zinke und damit ein hohes Anpassungsvermögen an etwaige Unebenheiten der zu bearbeitenden Oberfläche erzielt wird. Derartige "Laubbesen" eignen sich auch zum Sammeln von Laub auf Rasenflächen, da der Anpressdruck der Zinken nicht so groß ist, dass eine Zerstörung, insbesondere Zerfurchung, des Rasens bzw. ein Herausreißen von Rasenstücken oder Wurzelteilen befürchtet werden müsste.

Unbefriedigend bei den bekannten Rechen ist der Umstand, dass zusammengerechte Haufen, beispielsweise von Laub, nicht unter Verwendung desselben Werkzeugs, beispielsweise in einen Transport- oder Abfallbehälter, befördert werden können. Hierzu ist die Verwendung eines weiteren Werkzeugs, wie beispielsweise einer Schaufel - die in Kombination mit dem bekannten Rechen oder einem herkömmlichen Besen benutzt wird - erforderlich.

Bekannt sind des weiteren Garten- bzw. landwirtschaftliche Geräte in Form von Gabeln oder Forken. Diese können eine unterschiedliche Zahl von Zinken aufweisen, wobei üblicherweise drei bis zwanzig Zinken üblich sind. Mit derartigen Gabeln lassen sich angesammelte Haufen von Gras, Heu, Stroh, Laub oder ähnlichen Gütern zwar gut umladen. Die bekannten Gabeln ermöglichen es jedoch nicht, auf befriedigende Weise, beispielsweise Gras oder Laub, das über eine Fläche verstreut ist, zu sammeln.

Der Erfindung liegt die Aufgabe zugrunde, einen Rechen so weiter zu entwickeln, dass damit auch eine Verladung von zuvor gebildeten Haufen eines losen Gutes möglich ist.

Ausgehend von einem Rechen der eingangs beschriebenen Art, wird diese Aufgabe erfindungsgemäß dadurch gelöst, dass die Mittellinien der Zinken mit der Ebene des Oberteils einen Winkel α von 125° bis 135° einschließen und dass die Länge der Zinken - gemessen von dem Übergang von dem Oberteil zu dem Unterteil - zwischen 80mm und 180mm beträgt.

Während bei den bekannten Rechen der Winkel α zwischen 90° und 118° beträgt, beträgt der Winkel α bei bekannten Gabeln typischerweise zwischen 140° und 180°. Mit der Erfindung wird nunmehr erstmals ein Winkelbereich zwischen den bekannten Werten vorgeschlagen. Dasselbe gilt für die Länge der Zinken die bei Rechen typischerweise zwischen ca. 30mm und 60mm lang sind, hingegen bei Gabeln eine Länge von ca. 200mm bis 300mm aufweisen. Die jetzt vorgeschlagene geometrische Form ermöglicht es, mit dem anmeldungsgemäßen Gerät nicht nur Rechenarbeiten sehr effizient ausführen zu können, sondern gleichfalls den Rechen auch als Ladegabel zu benutzen. Der Wert eines derartigen Werkzeugs für den Benutzer ist gegenüber den bekannten Rechen deutlich erhöht, da mit dem erfindungsgemäßen Gerät zwei Funktionen erfüllt werden können. Es entfällt für den Nutzer daher zum einen die Notwendigkeit, ein zweites Gerät zu kaufen und zum anderen das Erfordernis, ein zweites Gerät stets mit sich zu führen, um beispielsweise nach dem mit einem Rechen ausgeführten Sammelvorgang anschließend den Ladevorgang auszuführen.

Vorzugsweise sollte der Winkel α zwischen 128° und 132°, weiter vorzugsweise 130°, betragen.

Die Stabilität des Rechens ist besonders groß und die Elastizität der Zinken optimal, wenn diese von einem Quersteg ausgehen, der im Bereich des Übergangs von dem Oberteil zu dem Unterteil verläuft. Gemessen von diesem Übergang sollten die Zinken vorzugsweise eine Länge zwischen 120 mm und 150 mm aufweisen.

Der Ladevorgang bei der Verwendung des erfindungsgemäßen Rechens als Ladegabel wird erleichtert, wenn die Zinken parallel zueinander und in derselben Ebene verlaufen, da hierdurch das Eindringen der Zinken in das Ladegut begünstigt wird.

Die Erfindung weiter ausgestaltend wird vorgeschlagen, dass das Oberteil aus einem Halteteil, an dem eine Tülle zur Aufnahme eines Stiels angeordnet ist, und einem dem Unterteil zugewandten Verbindungsteil besteht, das von Längsstreben gebildet ist, die in Verlängerung der Zinken verlaufen und jeweils von zwischen zwei Zinken angeordneten Durchbrüchen begrenzt sind.

Eine Weiterbildung der Erfindung besteht außerdem noch darin, dass der Quersteg zwischen dem Unterteil und dem Verbindungsteil bogenförmig verläuft, so dass die Länge der Zinken von der Mitte des Rechens zu dessen Rändern hin abnehmen.

Das Halteteil kann plattenförmig oder schalenförmig und massiv, das heißt ohne Durchbrüche, gestaltet sein und die Zinken können einen T-förmigen Querschnitt aufweisen, wobei die Gurte der Zinken jeweils in der Ebene des Unterteils verlaufen und daher den Zinken eine vergrößerte Stabilität gegenüber Durchbiegung verleihen. Außerdem wird vorgeschlagen, dass der Rechen ein Kunststoff-Spritzgussteil ist, da hierdurch eine besonders kostengünstige Massenproduktion möglich ist.

Um einen Verzug des Rechens während des Transportes zu vermeiden, wird vorgeschlagen, dass die Spitzen aller Zinken auf einer gemeinsamen Geraden angeordnet sind und somit bei einer senkrecht stehenden Anordnung des Rechens allesamt gleichmäßig einen Teil der Gewichtskraft des Rechens aufnehmen. Eine ungleichmäßige Verformung der Zinken oder des Rechens insgesamt kann daher auch bei längeren Transportdauern nicht auftreten.

Schließlich ist es noch besonders vorteilhaft, wenn ein Außenradius im Übergangsbereich der Zinken in das Oberteil zwischen 40 mm und 60 mm, vorzugsweise 50 mm, beträgt. Der Ladevorgang bei Verwendung des erfindungsgemäßen Rechens als Ladegabel wird durch eine solche Ausgestaltung weiter vereinfacht.

Die Erfindung wird nachfolgend anhand eines Ausführungsbeispiels eines Rechens, der in der Zeichnung dargestellt ist, näher erläutert. Es zeigt:
- Fig. 1: eine Draufsicht auf einen erfindungsgemäßen Rechen;
- Fig. 2: eine Unteransicht des Rechens nach Fig. 1;
- Fig. 3: eine Rückansicht des Rechens nach Fig. 1;
- Fig. 4: einen Schnitt entlang der Linie IV-IV durch den Rechen gemäß Fig. 2;
- Fig. 5: eine Seitenansicht des Rechens gemäß Fig. 1;
- Fig. 6: eine Darstellung des Rechens in Rechenfunktion und
- Fig. 7: eine Darstellung des Rechens in Gabelfunktion.

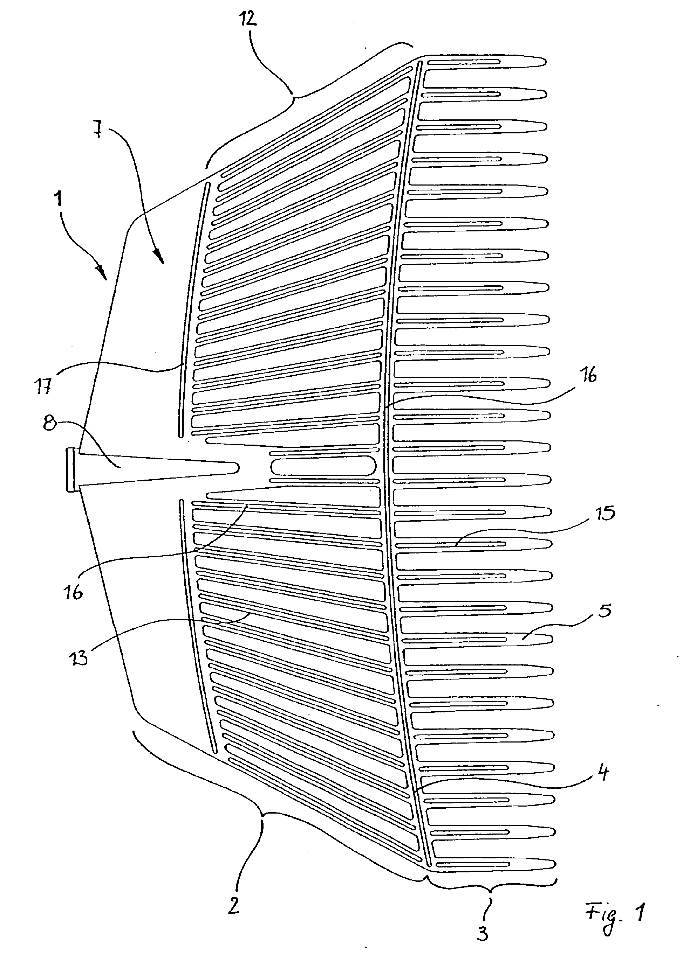

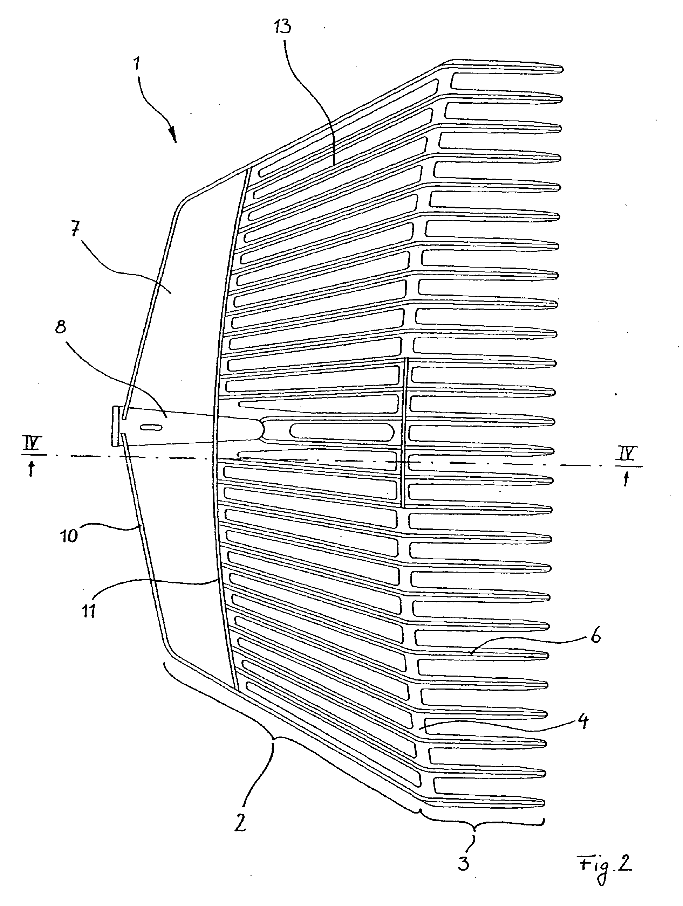

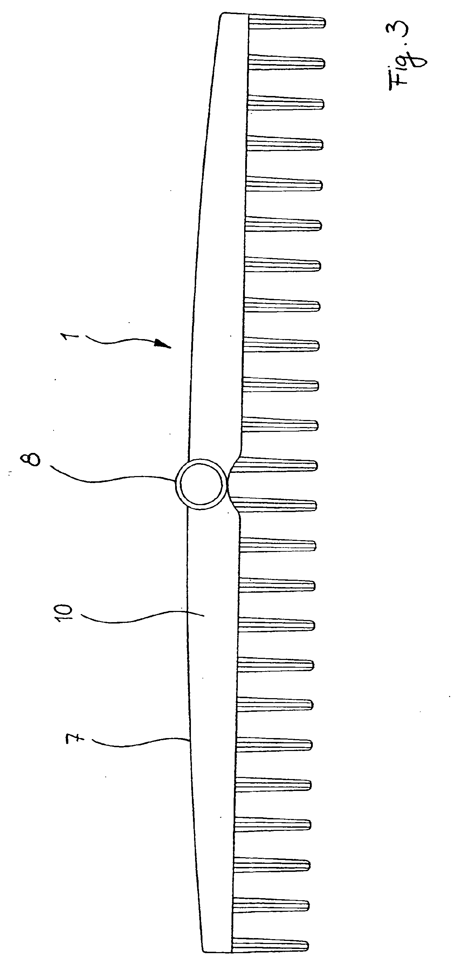

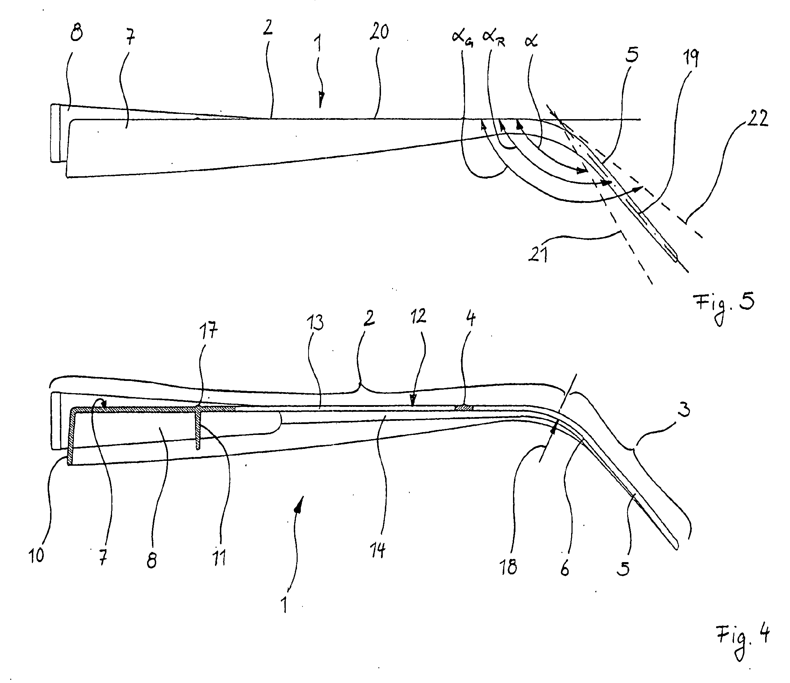

Ein in den Fig. 1 bis 5 dargestellter Rechen 1 besteht aus einem Oberteil 2 und einem Unterteil 3, die von einem bogenförmig verlaufenden Quersteg 4 gegeneinander abgegrenzt werden. Von diesem Quersteg 4 gehen eine Vielzahl von jeweils parallel zueinander verlaufenden und sich in Richtung des Querstegs 4 leicht verdickenden Zinken 5 aus. Diese Zinken besitzen in ihrer dem Quersteg 4 zugewandten Hälfte im Querschnitt die Form eines T, wobei die Höhe von rückseitig verlaufenden Rippen (siehe Fig. 2 und 4) in Richtung auf das Oberteil hin kontinuierlich zunimmt, um eine zur Basis der Zinken 5 hin anwachsende Biegespannung aufnehmen zu können.

Das Oberteil 2 besteht aus einem plattenförmigen und massiven Halteteil 7, an dem eine Tülle 8 zur Aufnahme eines Stiels 9 angeordnet ist. Zur Erhöhung der Torsionssteifigkeit ist das Halteteil 7 mit zwei in Querrichtung verlaufenden Wandteilen 10 und 11 versehen.

Das Oberteil weist des weiteren ein Verbindungsteil 12 auf, das von einer Mehrzahl von Längsstreben 13 gebildet ist, die in Verlängerung der Zinken 6 von dem Quersteg 4 bis zu dem Halteteil 7 verlaufen. Wie sich der Fig. 4 entnehmen lässt, sind auch die Längsstreben 13 im Querschnitt T-förmig, wobei die rückwärtig angeordneten Rippen 14 nahtlos an die Rippen 6 der Zinken 5 anschließen und sich in ihrer Höhe bis zur Spitze der Tülle 8 im Sinne einer beanspruchsgerechten Konstruktion kontinuierlich vergrößern.

Zur Kompensation etwaiger Einfallstellen, sind sowohl die Zinken 5 als auch die Querstreben 13 vorderseitig (Fig. 1) mit rippenartigen sehr flachen Aufdickungen 15 und 16 versehen. Ähnliche Aufdickungen 16 und 17 befinden sich auf der Vorderseite des Steges 4 sowie der Vorderseite des Halteteils 7 im Bereich gegenüberliegend der Wandung 11.

Wie aus Fig. 4 ersichtlich ist, beträgt der Außenradiums 18 im Bereich des Übergangs von den Zinken 5 zu den Längsstreben 13 ca. 50 mm.

In Fig. 5 ist dargestellt, dass der erfindungsgemäße Winkel α zwischen der Mittelachse 19 der Zinken 5 und der Ebene 20 des Oberteils 2 130° beträgt. Zur Veranschaulichung sind in Fig. 5 aus Vergleichsgründen noch die Winkel α_{R} eines Rechens nach dem Stand der Technik sowie der Winkel α_{G} einer bekannten Ladegabel eingetragen. Die Mittellinien der Zinken 21 und 22 des bekannten Rechens bzw. der bekannten Gabel sind mit dem Bezugszeichen 21 und 22 gekennzeichnet.

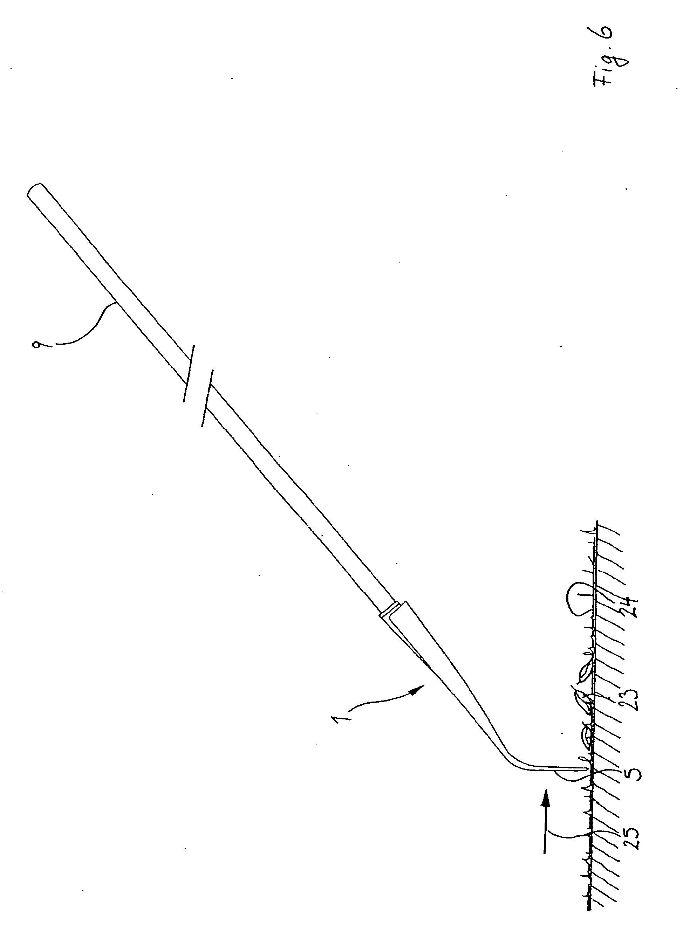

In Fig. 6 ist dargestellt, wie der erfindungsgemäße Gegenstand als Rechen zum Sammeln von Laub 23 auf einer Bodenfläche 24 verwendet wird. Dabei werden die Spitzen der Zinken 5 in Richtung des Pfeils 25 über die Bodenfläche 24 gezogen, wobei der Stiel 9 die dargestellte geneigte Position besitzt.

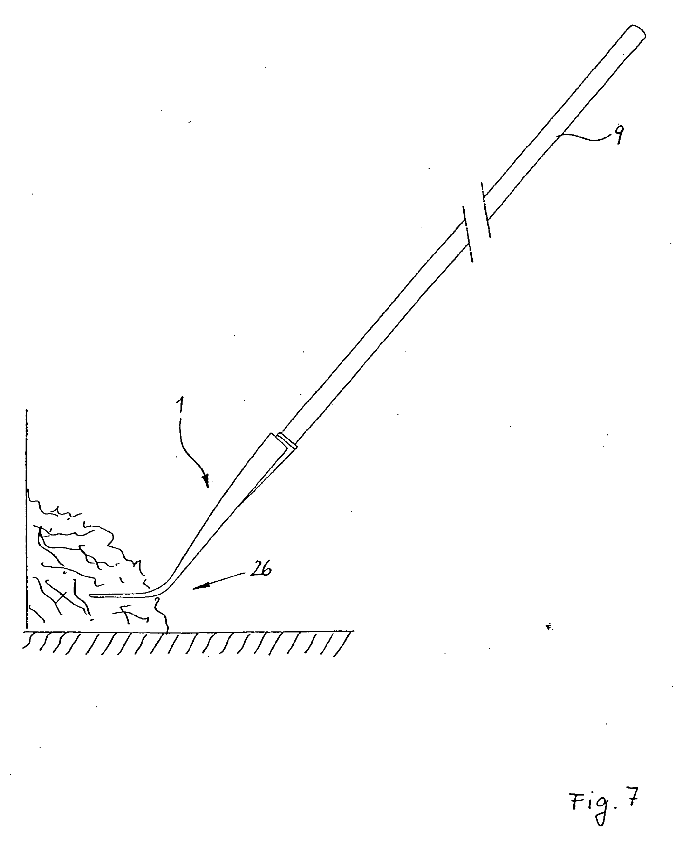

Der Fig. 7 lässt sich hingegen entnehmen, dass der erfindungsgemäße Rechen 1 gleichfalls als Ladegabel verwendbar ist. Durch Drehung des Stiels um 180° um seine eigene Achse besitzt der Erfindungsgegenstand die Form einer Ladegabel, die in Richtung des Pfeils 26 beispielsweise in einen Haufen 27 aus gesammelten Laub oder aus Heu oder Stroh einführbar ist.

## Patentansprüche

1. Rechen (1) mit einem Oberteil (2) zur Verbindung mit einem Stiel (9) und einem abgewinkelt gegenüber dem Oberteil (2) angeordneten Unterteil (3) mit einer Mehrzahl von Zinken (5), **dadurch gekennzeichnet, dass** die Mittellinien (19) der Zinken (5) mit der Ebene (20) des Oberteils (2) einen Winkel α von 125° bis 135° einschließen und dass die Länge der Zinken (5) zwischen 80mm und 180mm beträgt.

2. Rechen nach Anspruch 1, **dadurch gekennzeichnet, dass** der Winkel α zwischen 128° und 132°, vorzugsweise 130°, beträgt.

3. Rechen nach Anspruch 2, **dadurch gekennzeichnet, dass** die Zinken (5) von einem Quersteg (4) ausgehen, der im Bereich des Übergangs von dem Oberteil (2) zu dem Unterteil (3) verläuft.

4. Rechen nach einem der Ansprüche 1 bis 3, **dadurch gekennzeichnet, dass** die Zinken (5) - gemessen von dem Übergang von dem Oberteil (2) zum Unterteil (3) - eine Länge zwischen 120 mm und 150 mm, aufweisen.

5. Rechen nach einem der Ansprüche 1 bis 4, **dadurch gekennzeichnet, dass** die Zinken (5) parallel zueinander und in derselben Ebene verlaufen.

6. Rechen nach einem der Ansprüche 1 bis 5, **dadurch gekennzeichnet, dass** das Oberteil (2) aus einem Halteteil (7), an dem eine Tülle (8) zur Aufnahme eines Stiels (9) angeordnet ist, und einem dem Unterteil (3) zugewandten Verbindungsteil (12) besteht, das von Längsstreben gebildet ist, die in der Verlängerung der Zinken (5) verlaufen und jeweils von zwischen zwei Zinken (5) angeordneten Durchbrüchen begrenzt sind.

7. Rechen nach Anspruch 6, **dadurch gekennzeichnet, dass** der Quersteg (4) zwischen dem Unterteil (2) und dem Verbindungsteil (12) bogenförmig verläuft, so dass die Länge der Zinken (5) von der Mitte des Rechens (1) zu dessen Rändern hin abnimmt.

8. Rechen nach Anspruch 6 oder 7, **dadurch gekennzeichnet, dass** das Halteteil (7) plattenförmig oder schalenförmig und massiv ist.

9. Rechen nach einem der Ansprüche 1 bis 8, **dadurch gekennzeichnet, dass** die Zinken (5) im Querschnitt T-förmig sind, wobei die Gurte der Zinken (5) jeweils in der Ebene des Unterteils (3) verlaufen.

10. Rechen nach einem der Ansprüche 1 bis 9, **dadurch gekennzeichnet, dass** der Rechen (1) ein Kunststoff-Spritzgussteil ist.

11. Rechen nach einem der Ansprüche 1 bis 10, **dadurch gekennzeichnet, dass** die Spitzen aller Zinken (5) auf einer gemeinsamen Geraden angeordnet sind.

12. Rechen nach einem der Ansprüche 1 bis 11, **dadurch gekennzeichnet, dass** ein Außenradius (18) im Bereich des Übergangs von den Zinken (5) zu dem Oberteil (2) zwischen 40 mm und 60 mm, vorzugsweise 50 mm, beträgt.

## Claims

1. A rake (1) with an upper part (2) for connecting to a handle (9) and a lower part (3), which is arranged angled with respect to the upper part (2), have a plurality of tines (5), **characterised in that** the axes (19) of the tines (5) and the plane (20) of the upper part (2) include an angle α of 125° to 135° and **in that** the length of the tines (5) is between 80 mm and 180 mm.

2. The rake as specified in claim 1, **characterised in that** the angle α is between 128° and 132°, preferably 130°.

3. The rake as specified in claim 2, **characterised in that** the tines (5) proceed from a cross member (4) that extends in the region of the transition from the upper part (2) to the lower part (3).

4. The rake as specified in any one of the claims 1 to 3, **characterised in that** the tines (5) have a length between 120 mm and 150 mm when measured from the transition from the upper part (2) to the lower part (3).

5. The rake as specified in any one of the claims 1 to 4, **characterised in that** the tines (5) extend parallel to one another and in the same plane.

6. The rake as specified in any one of the claims 1 to 5, **characterised in that** the upper part (2) consists of a holding portion (7) on which a sleeve (8) is arranged for receiving a handle (9), and furthermore consists of a connecting piece (12) opposite the lower part (3), which connecting piece is configured of longitudinal struts that extend in the direction of the tines (5) and are respectively delimited by recesses arranged between two tines (5).

7. The rake as specified in claim 6, **characterised in that** the transverse member (4) extends in an arc between the lower portion (2) and the connecting piece (12) in such a manner that the length of the tines (5) decreases from the middle of the rake (1) to the edges thereof.

8. The rake as specified in claim 6 or claim 7, **characterised in that** the holding portion (7) is plate-shaped or shell-shaped and is solid.

9. The rake as specified in any one of claims 1 to 8, **characterised in that** the tines (5) have a T-shaped cross-section, wherein the girths of the tines (5) respectively extend in the plane of the lower part (3).

10. The rake as specified in any one of claims 1 to 9, **characterised in that** the rake (1) is a plastic injection-moulded part.

11. The rake as specified in any one of claims 1 to 10, **characterised in that** the tips of all tines (5) share an arrangement in a straight line.

12. The rake as specified in any one of claims 1 to 11, **characterised in that** the external radius (18) in the region of the transition from the tines (5) to the upper part (2) is between 40 mm and 60 mm, preferably 50 mm.

## Revendications

1. Grille de retenue (1) comprenant une partie supérieure (2) destinée à être reliée à un manche (9) et une partie inférieure (3) placée de manière coudée par rapport à la partie supérieure (2) avec une pluralité de dents (5), **caractérisée en ce que** les lignes médianes (19) des dents (5) forment avec le plan (20) de la partie supérieure (2) un angle α de 125° à 135° et que la longueur des dents (5) fait entre 80 mm et 180 mm.

2. Grille de retenue selon la revendication 1, **caractérisée en ce que** l'angle α fait entre 128° et 132°, de préférence 130°.

3. Grille de retenue selon la revendication 2, **caractérisée en ce que** les dents (5) partent d'une branche transversale (4) qui s'étend dans la zone du passage de la partie supérieure (2) à la partie inférieure (3).

4. Grille de retenue selon l'une des revendications 1 à 3, **caractérisée en ce que** les dents (5), mesurées depuis le passage de la partie supérieure (2) à la partie inférieure (3), présentent une longueur entre 120 mm et 150 mm.

5. Grille de retenue selon l'une des revendications 1 à 4, **caractérisée en ce que** les dents (5) s'étendent parallèlement entre elles et dans le même plan.

6. Grille de retenue selon l'une des revendications 1 à 5, **caractérisée en ce que** la partie supérieure (2) est formée d'une pièce de fixation (7) sur laquelle est placée une douille (8) pour recevoir un manche (9) et d'une pièce de liaison (12) tournée vers la partie inférieure (3), laquelle est formée de contreforts longitudinaux qui s'étendent dans le prolongement des dents (5) et sont délimités respectivement par des percées situées entre deux dents (5).

7. Grille de retenue selon la revendication 6, **caractérisée en ce que** la branche transversale (4) est arquée entre la partie supérieure (2) et la pièce de liaison (12), de façon à ce que la longueur des dents (5) diminue du centre de la grille de retenue (1) vers ses bords.

8. Grille de retenue selon la revendication 6 ou 7, **caractérisée en ce que** la pièce de fixation (7) est en forme de plaque ou de coque et est solide.

9. Grille de retenue selon l'une des revendications 1 à 8, **caractérisée en ce que** les dents (5) ont une section transversale en T, sachant que les membrures des dents (5) s'étendent respectivement dans le plan de la partie inférieure (3).

10. Grille de retenue selon l'une des revendications 1 à 9, **caractérisée en ce que** la grille de retenue (1) est une pièce moulée par injection en plastique.

11. Grille de retenue selon l'une des revendications 1 à 10, **caractérisée en ce que** les pointes de toutes les dents (5) sont placées sur une droite commune.

12. Grille de retenue selon l'une des revendications 1 à 11, **caractérisée en ce qu'**un rayon extérieur (18) dans la zone du passage des dents (5) à la partie supérieure (2) fait entre 40 mm et 60 mm, de préférence 50 mm.
